# EUROPEAN PATENT SPECIFICATION

(11) **EP 3 846 580 B1**
(45) Date of publication and mention of the grant of the patent: **26.07.2023**
(21) Application number: 19858397.3
(22) Date of filing: 15.08.2019
(51) Int. Cl.: H04W 88/06, H04W 24/08, H04L 67/75, H04M 1/724, H04W 76/15

(54) **NETWORK STATE IDENTIFIER DISPLAY CONTROL METHOD AND RELATED PRODUCT**
VERFAHREN ZUR STEUERUNG DER ANZEIGE EINES NETZWERKSTATUSIDENTIFIKATORS UND ZUGEHÖRIGES PRODUKT
PROCÉDÉ DE COMMANDE D'AFFICHAGE D'IDENTIFIANT D'ÉTAT DE RÉSEAU ET PRODUIT ASSOCIÉ

(30) Priority: 04.09.2018 CN 201811028377
(43) Date of publication of application: 07.07.2021
(73) Proprietor: GUANGDONG OPPO MOBILE TELECOMMUNICATIONS CORP., LTD., Dongguan Guangdong 523860 (CN)
(72) Inventor: ZHANG, Tao, Dongguan, Guangdong 523860 (CN); XIA, Yang, Dongguan, Guangdong 523860 (CN); TANG, Kai, Dongguan, Guangdong 523860 (CN)
(74) Representative: Manitz Finsterwald Patent- und Rechtsanwaltspartnerschaft mbB
(86) International application number: PCT/CN2019/100817
(87) International publication number: WO 2020/048303

(56) References cited:
- EP-A2- 2 432 204
- CN-A- 104 244 466
- CN-A- 107 548 124
- JP-A- 2010 087 627
- QUALCOMM INCORPORATED ET AL: "Consideration on the GSMA NR indication requirements", 3GPP DRAFT; R2-1803664 CONSIDERATION ON GSMA NR INDICATION REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Athens, Greece; 20180226 - 20180302 16 February 2018 (2018-02-16), XP051400687, Retrieved from the Internet: URL:http://www.3gpp.org/ftp/tsg%5Fran/WG2% 5FRL2/TSGR2%5F101/Docs/ [retrieved on 2018-02-16]
- MEDIATEK INC: "On 5G Indicators", 3GPP DRAFT; S2-174624 ON 5G INDICATORS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San José del Cabo, MX; 20170327 - 20170331 25 June 2017 (2017-06-25), XP051303467, Retrieved from the Internet: URL:http://www.3gpp.org/ftp/Meetings_3GPP_ SYNC/SA2/Docs/ [retrieved on 2017-06-25]
- QUALCOMM INCORPORATED ET AL: "Considerations on NR indication", 3GPP DRAFT; R2-1707879 CONSIDERATIONS ON NR INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317816, Retrieved from the Internet: URL:http://www.3gpp.org/ftp/Meetings_3GPP_ SYNC/RAN2/Docs/ [retrieved on 2017-08-20]
- NEC: "AS support for 5G indication", 3GPP DRAFT; R2-1708228_5G INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318130, Retrieved from the Internet: URL:http://www.3gpp.org/ftp/Meetings_3GPP_ SYNC/RAN2/Docs/ [retrieved on 2017-08-20]
- NOKIA ET AL: "On NR/LTE Dual connectivity deployment options and what Service Indication the UE shall display", 3GPP DRAFT; S2-174603 SUPPORT OF SERVICE INDICATOR IN REL-15 V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose del Cabo, Mexico; 20170626 - 20170630 20 June 2017 (2017-06-20), XP051309656, Retrieved from the Internet: URL:http://www.3gpp.org/ftp/tsg_sa/WG2_Arc h/TSGS2_122_Cabo/Docs/ [retrieved on 2017-06-20]

## Description

### TECHNICAL FIELD

The present disclosure relates to the field of communication technology, and in particular to a control method for displaying a network-state identifier and related products (electronic device and computer-readable storage medium).

### BACKGROUND

With the development of mobile communication technology, users have an increasing demand for communicating using electronic devices such as mobile phones and laptops. At the present time, while electronic devices are transmitting data, data plane services may be transmitted through a data network, such as a 4^{th} Generation (4G) long-term evolution (LTE) network, whereas telephone service data may still be transmitted through a traditional circuit domain network, such as a 2^{nd} Generation (2G) network and a 3^{rd} Generation (3G) network. The electronic device may display a service identifier on a relevant interface of a local end to indicate a current communication state of the electronic device. With respect to an IMS call service of an IP multimedia subsystem (IMS), a display scheme for a network-state identifier of a service in a 5^{th} Generation (5G) non-standalone (NSA) communication system is still not available.

3GPP draft R2-1803664 discloses Consideration on the GSMA NR indication requirements, which revisits or confirms the working assumption for NR indication based on the GSMA requirements and includes NR neighbor frequency information in LTE SI to efficiently search for NR in order to support the GSMA NR indication requirements for measurements.

3GPP draft S2-174624 discloses On 5G Indicators, which discusses the issue of 5G Indicator for the UE MMI and proposes a way forward.

3GPP draft R2-1707879 discloses Considerations on NR indication, which discusses potential solutions for the NR indication requested by SA2.

3GPP draft R2-1708228 discloses AS support for 5G indication, which discussed the SIB indicator suggested by SA2 so that the UE can provide an indication to the user that NR is supported in the cell and allowed by the subscription.

3GPP draft S2-174603 discloses On NR/LTE Dual connectivity deployment options and what Service Indication the UE shall display. It is proposed that SA2 discusses the above and that if SA2 cannot find a straightforward answer to the questions above, relevant stage 1 organizations are involved.

CN 104 244 466 A discloses a network state display method. The processing module is used for generating a network state area and at least two network identity areas according to the current network state information of the terminal. The network state area is used for displaying the state identities of different networks. At least two network identity areas are respectively used for displaying the network identities of at least two different networks.

CN 107 548 124 A discloses a method and a device for displaying a network state of a wireless access point. The method comprises the steps of parsing and receiving a Probe Response message or a Beacon message transmitted by a wireless access point, and obtaining network state information of the wireless access point; and showing a Wi-Fi signal icon of the wireless access point which is marked with a corresponding preset identifier based on the network state information of the wireless access point.

### SUMMARY OF THE DISCLOSURE

The invention is set out in the appended set of claims.

### BRIEF DESCRIPTION OF THE DRAWINGS

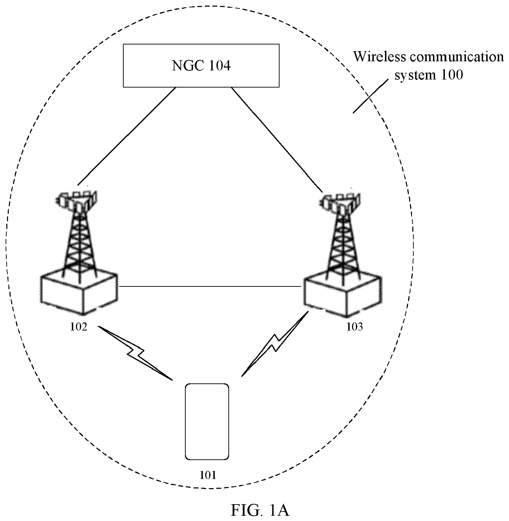

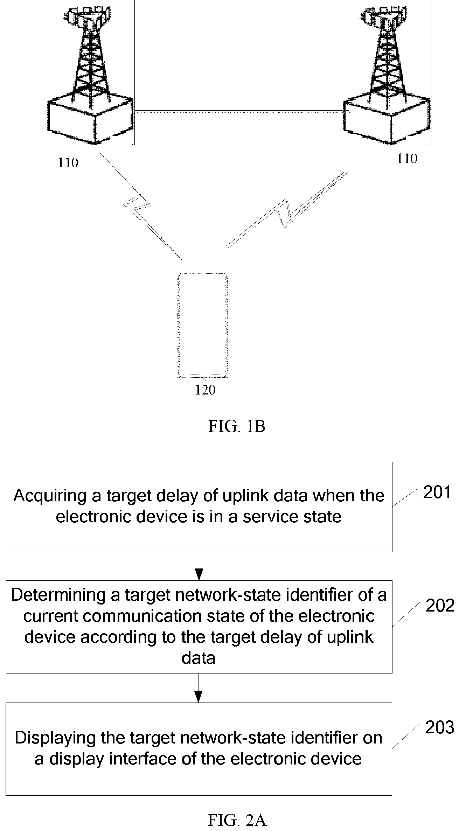

In order to clearly describe technical solutions in the embodiments of the present application or in the prior art, accompanying drawings for the description of the embodiments or the prior art will be introduced in brief. Obviously, the drawings in the following description are only some embodiments of the present disclosure. Any ordinary skilled in the art may obtain other drawings based on the following drawings without creative work. The invention is based on the embodiments and examples disclosed below with reference to Figures 2A, 3-5, 6A and 6B when making reference to the system depicted in Figure 1A. Additional embodiments and examples below are disclosed for illustrative purposes.
FIG. 1A is an exemplary architecture of a wireless communication system according to some embodiments of the present disclosure.
FIG. 1B is a schematic view of the connection of a communication system.
FIG. 2A is a flowchart of a control method for displaying network-state identifier according to some embodiments of the present disclosure.
FIG. 2B is a demonstrating schematic view of a control method for displaying network-state identifier according to some embodiments of the present disclosure.
FIG. 2C is a demonstrating schematic view of another control method for displaying network-state identifier according to some embodiments of the present disclosure.
FIG. 3 is a flowchart of another control method for displaying network-state identifier according to some embodiments of the present disclosure.
FIG. 4 is a flowchart of another control method for displaying network-state identifier according to some embodiments of the present disclosure.
FIG. 5 is a structural schematic view of an electronic device according to some embodiments of the present disclosure.
FIG. 6A is a block diagram of functional units of a device for network-state identifier display control according to some embodiments of the present disclosure.
FIG. 6B is another block diagram of functional units of a device for network-state identifier display control according to some embodiments of the present disclosure.

### DETAILED DESCRIPTION

In order to enable the skilled person in the art to better understand technical solutions of the present disclosure, the technical solutions of the embodiments of the present disclosure will be described clearly and completely in combination with the accompanying drawings Obviously, the described embodiments are only a part of, but not all of, the embodiments of the present disclosure.

Terms "first", "second", and the like in the description and claims of the present disclosure and in the above-mentioned drawings are used to distinguish different objects, but not to describe a specific order. Furthermore, terms "including", "having" and any variations thereof are intended to suggest non-exclusive inclusion. For example, a process, a method, a system, a product, or a device including a series of operations or units are not limited to the listed operations or units, but alternatively also includes operations or units that are not listed, or also includes other operations or units inherently included in the process, in the method, in the product or in the device.

An "embodiment" mentioned in the present disclosure may refer to a particular feature, a structure, or a property described in connection with the embodiment being included in at least one embodiment of the present disclosure. The term occurring in various sections of the specification may not refer to a same embodiment, or an embodiment that is independent from, alternative to, or mutually exclusive with other embodiments. Skilled person in the art shall understand that the embodiments described herein may be combined with other embodiments.

The electronic device involved in the embodiments of the present disclosure may be an electronic device capable of transmitting data. The electronic device may include various devices with wireless communication functions, such as a handheld device, a vehicle-mounted device, a wearable device, a computing device, or a wireless modem, and user equipment (UE) in various forms, a mobile station (MS), a terminal device, and so on. The embodiments of the present disclosure will be described in detail below.

The technical solutions of the embodiments of the present disclosure may be applied to various communication systems. The communication systems may include, but are not limited to, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD), a Universal Mobile Telecommunication System (UMTS), a Worldwide Interoperability for Microwave Access (WiMAX) communication system or a 5G new radio (NR) and so on. In detail, the technical solutions in the embodiments of the present disclosure may be applied to eMBB services under the Option 7a architecture or ultra reliable low latency communications (URLLC). As shown in FIG. 1A, a wireless communication system 100 of the present embodiment includes: an electronic device, a base station and a fifth-generation (5G) core network device. A network accessed by the electronic device 101 may be a 5G non-standalone (NSA) network. The network includes specifically a base station 102 (4G base station eNB), a base station 103 (5G base station gNB) and NG Core 104. A control plane signaling may be transmitted through the base station 102. The user plane data of the electronic device may be transmitted to the core network device NG Core 104 through the base station 102 and 103 respectively. The base station 103 may be communicatively connected to the core network device 104. The electronic device 101 specifically maintains a communicative connection with the base station 102 and the base station 103 at the same time in the dual connection mode, and a voice call service may be achieved through the network, such as eMBB service.

As exemplary, a communication system applied in the present embodiment is shown in FIG. 1B. The communication system may include a network device 110. The network device 110 may be a device that communicates with an electronic device 120 (also called communication terminal device or terminal device). The network device 110 may provide communication coverage for a specific geographic area, and may communicate with the electronic devices within the area. As shown in FIG. 1B, the terminal supports dual connection, meaning that the electronic device 120 may connect through two network devices, one electronic device 110 may be (as shown on the left of FIG. 1B) an evolutional node B (eNB or eNodeB) in an LTE system , another electronic device (as shown on the right of FIG. 1B) may be a base station of a 5G network gNB.

The communication system may also include at least one electronic device 120 within the coverage area of the electronic device 110. The electronic devices used in the present embodiment include, but not limited to the devices connected by a wire circuit, such as by public switched telephone networks (PSTN), a digital subscriber line (DSL), a digital cable and a direct cable connection; and/or another data connection/network; and/or by a wireless interface, such as a cellular network, a wireless local area network (WLAN), a digital television network of DVB-H network, a satellite network and an AM-FM broadcast transmitter; and/or another electronic device is set as the device of sending/receiving communication signal; and/or an internet of things (IoT) device. An electronic device set as communication by a wireless interface may be referred to as a "wireless communication electronic device", a "wireless electronic device" or a "mobile electronic device". The mobile electronic device includes, but is not limited to a satellite or cellular phone; an electronic device of personal communications system (PCS) that combines cellular wireless phones with data processing, fax and data communication abilities; a radio telephone, a Beep-Pager, an internet/intranet connection, a web browser, a notebook, a calendar and/or a PDA of global positioning system (GPS) receiver; a conventional laptop and/or palmtop receiver, or other electronic devices that include a radio telephone transceiver. An electronic device may refer to an accessed electronic device, an user equipment (UE), an user unit, an user station, a mobile station, a mobile platform, a remote station, a remote electronic device, a mobile device, an user electronic device, an electronic device, a wireless communication device, an user agent or an user device. The accessed electronic device can be a cellular telephone, a cordless telephone, a session initiation protocol (SIP) telephone, a wireless local loop (WLL) station, a personal digital assistant (PDA), a handheld device with wireless communication functions, a computing device or other processing devices connected to wireless modems, an on-board device, a wearable device, an electronic device in a 5G network or an electronic device in the future evolution of PLMN, etc.

Please refer to FIG. 2A, FIG. 2A is a flowchart of a control method for displaying network-state identifier according to some embodiments of the present disclosure, which is applied to an electronic device. The electronic device supports a dual connection mode, and the dual connection mode refers to the electronic device is capable of establishing a first communication connection with a first network device and is capable of establishing a second communication connection with a second network device. The first network device and the second network device are 5G NSA network devices, and the first network device is a fourth-generation (4G) base station eNB, the second network device is a 5G base station gNB, and a core network of the 5G NSA network is a next-generation core network (NGC). The first network device is communicatively connected to the second network device, and the first network device is communicatively connected to the NGC. As shown in FIG. 2A, the control method for displaying network-state identifier includes following operations.

In an operation 201, when the electronic device is in a service state, a target delay of uplink data is acquired. The service state may include but is not limited to: an EMBB service state, a NR uRLLC service state, etc., which is not limited here. Uplink data refers to an electronic device sending data to an eNB, or an electronic device sending data to a gNB. The target delay of uplink data may be a delay time between the electronic device and the eNB, or a delay time between the electronic device and the gNB, or the sum of a delay time between the electronic device and the eNB and between the electronic device and the gNB.

In an operation 202, the target network-state identifier of a current communication state of the electronic device is determined according to the target delay of uplink data. The delay of uplink data determines a channel selection of the electronic device to a certain extent, and therefore, the network-state identifier of the electronic device is also different. The aforementioned target network-state identifier may be at least one of the following: a NR uRLLC identifier, a 4G identifier, a 5G identifier, etc., which is not limited here.

In a possible example, the foregoing operation 202, determining the target network-state identifier of the current communication state of the electronic device according to the target delay of uplink data, may include actions at the following blocks.
At block 21, a target delay-range corresponding to the target delay of uplink data is determined;
At block 22, the target network-state identifier corresponding to the target delay-range according to a preset mapping relationship between delay-ranges and network-state identifiers is determined.

Different above-mentioned uplink data delay parameters correspond to different delay-ranges, and multiple delay range parameters can be stored in the electronic device in advance. Furthermore, the target delay of uplink data can be compared with the upper and lower limits of the delay-range to obtain the target delay-range corresponding to the target delay of uplink data. The electronic device may also pre-store the mapping relationship between preset delay-ranges and network-state identifiers, and further, determine the target network-state identifier corresponding to the target delay-range according to the mapping relationship.

In a possible example, the foregoing block 22, determining the target network-state identifier corresponding to the target delay-range according to the mapping relationship between the preset delay-range and the network-state identifier can be implemented as follows.

When the target delay-range is a first preset range, the target network-state identifier is determined as a NR uRLLC identifier; when the target delay-range is a second preset range, the target network-state identifier is determined as a 4G identifier. The upper limit of the first preset range is less than the lower limit of the second preset range.

The first preset range and the second preset range can be set by the user or the system defaults. Specifically, when the target delay-range is the first preset range, the target network-state is identified as the NR uRLLC identifier, and when the target delay-range is the second preset range, the target network-state is identified as the 4G identifier, and the first preset The upper limit of the first preset range is less than the lower limit of the second preset range.

For example, if the target delay of uplink data is between {2.5ms, 16ms}, the target network-state identifier is NR uRLLC; if the target delay of uplink data is > 50ms, the target network-state identifier is 4G.

In a possible example, the determining that the target network-state identifier is the NR uRLLC identifier includes the following.
A1. sending a network-state identifier query request for the NR uRLLC service to the first network device;
A2. receiving indication information of a network-state identifier from the first network device;
A3. determining and storing the network-state identifier of the NR uRLLC service according to the network-state identifier indication information.

Since the NR uRLLC service is one of the important functions of an electronic device, the network-state identifier type corresponding to the data service supported by the current network architecture through the network-state identifier query request can be determined after the electronic device joins the 5G NSA network. That is, the network-state identifier query mechanism is agreed at the protocol level. In addition, the network-state identifier information of the NR uRLLC under the network architecture can be stored on a network side.

In specific implementation, the electronic device can send a network-state identifier query request through a control channel (such as Common Control Channel (CCCH) and Dedicated Control Channel (DCCH)) with a base station, and a NG Core receives the query request for network-state identifier of the electronic device. The indication information of the network-state identifier is generated according to the network-state identification of the NR uRLLC service pre-configured at the local end, and is sent to the electronic device through the base station.

The network-state identifier of the above NR uRLLC service may specifically include a 4G identifier and a 5G identifier. The specific manifestations of the 4G identifier and 5G identifier may vary according to different operators. The present embodiment does not limit the specific representation of the above 4G identifier and 5G identifier.

It can be seen that in this example, the electronic device can quickly and accurately determine the network-state identifier of the NR uRLLC service through a query mechanism, thereby improving the accuracy and efficiency of the network-state identifier display.

In an operation 203, the target network-state identifier is displayed on the display interface of the electronic device.

The electronic device can display the target network-state identifier on the display interface.

The above operation 203, displaying the target network-state identifier on the display interface of the electronic device may include actions at the following blocks.

At block 31, a target signal strength value of the electronic device is acquired.

At block 32, a target display parameter corresponding to the target network-state identifier according to the target signal strength value is determined.

At block 33, the target network-state identifier on the display interface of the electronic device according to the target display parameter is displayed.

The above-mentioned display parameters may include, but are not limited to: font size, font color, display area size, font width, font length, font transparency, etc., which are not limited here. In specific implementation, the electronic device can pre-store a mapping relationship between the signal strength value and the display parameter, and then determine the target signal strength value according to the mapping relationship to determine the target display parameter corresponding to the target network-state identifier, and the target network-state identifier is displayed on the display interface of the electronic device according to the target display parameter.

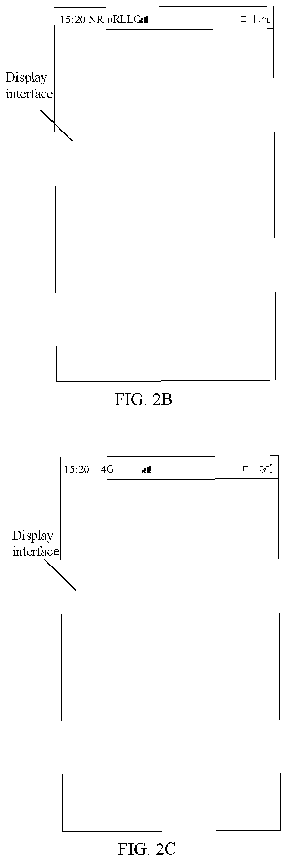

For example, in the embodiment of the present disclosure, the 5G network-state identifier may include the NR uRLLC identifier(see FIG. 2B). The 5G network-state identifier can be displayed on the top or bottom of the display screen, or any other part. For example, the 5G network-state identifier can be displayed on the left side of the top (tip) of the display screen, close to the time display position.

For example, in the embodiment of the present disclosure, the 4G network-state identifier may include 4G (refer to FIG. 2C). The 4G network-state identifier can be displayed on the top or bottom of the display screen, or any other part. For example, the 4G network-state identifier can be displayed on the left side of the top (tip) of the display screen, close to the time display position.

It can be seen that, in the embodiment of the present disclosure, when the electronic device detects that the electronic device is in a service state, it obtains the target delay of uplink data, and determines the current communication state of the electronic device according to the target delay of uplink data. The display interface of the electronic device displays the target network-state identifier. It can be seen that when the electronic device is in the service state, the corresponding network-state identifier can be selected according to the data delay parameter of the uplink data, such as displaying the 4G identifier or 5G identifier, etc., so that the actual data state of the electronic device during the service state can be accurately, intuitively and comprehensively displayed, which improves the comprehensiveness and accuracy of information displayed by electronic device.

In a possible example, the electronic device displays the network-state identifier on the interface of the NR uRLLC service of the electronic device, including: the electronic device displays the network-state identifier in the preset location of the interface of the NR uRLLC service of the electronic device, and the preset location matches the display location of the network connection state of the electronic device.

The preset position matches the display position of the network connection state of the electronic device, which specifically means that the preset position can be adjacent to, opposite to, or separated from the network connection state display position by a preset distance (such as 1 mm to 150mm, etc.), there is no unique limitation here.

In addition, the display parameters (such as color, background color, font, size) of the network-state identifier can be consistent with or inconsistent with the network connection state, and there is no unique limitation here. For example, the font size of the network-state identifier can be set to be the same as the network connection state, and the background color can also be set to be the same.

It can be seen that in this example, the electronic device can display the network-state identifier in the preset position of the NR uRLLC service interface, and the preset position matches the display position of the network connection state, so that the current communication state of the electronic device can be fully presented and the comprehensiveness of electronic device displaying communication state information is improved.

In a possible example, the electronic device displaying the network-state identifier on the interface of the NR uRLLC service of the electronic device includes: the electronic device switching the network connection state identifier to the network-state identifier on the interface of the NR uRLLC service of the electronic device.

In a possible example, the electronic device displaying the network-state identifier on the interface of the NR uRLLC service of the electronic device includes: the electronic device determining the interface of the NR uRLLC service; and querying the corresponding relationship between the pre-configured interface and the display position of the network-state identifier, determining the target display position corresponding to the interface of the NR uRLLC service, and displaying the network-state identifier at the target display position.

In specific implementation, the preset position can be different for different types of interfaces of the electronic device. For example, for data state interface, the network-state identifier can be displayed in the upper left corner of the interface, and for the display of the integrated application interface after opening other applications in the data state, the network-state identifier can be displayed in the upper middle position of the integrated application interface, etc.

It can be seen that, in this example, the electronic device can flexibly adjust and adapt the display position of the network-state identifier of the current service interface for different types of interfaces of the NR uRLLC service, and improve the flexibility and intelligence of the electronic device in displaying the network-state identifier.

In a possible example, after actions at the above block 203, the following operations may be further included.

The data of the NR uRLLC service through the 5G NSA network is transmitted.

The service data of the NR uRLLC service specifically includes the user's uplink data.

It can be seen that in this example, the electronic device specifically transmits the uplink data of the NR uRLLC service through the 5G NSA network, which is consistent with the network architecture associated with the currently displayed network-state identifier. The consistency of the electronic device's display of the network-state identifier is improved.

In a possible example, the data of the NR uRLLC service through the 5G NSA network is transmitted in the above steps, which can be implemented as follows.

The data of the NR uRLLC service is transmitted with the 5G core network device through the second communication connection and with the 5G core network device through the first communication connection.

In a specific implementation, the uplink data can be directly connected to the NG Core through the second communication for interaction, and can directly interact with the NG Core through the first communication connection according to actual conditions.

In a possible example, the electronic device transmitting the uplink data of the NR uRLLC service through the 5G NSA network includes: transmitting the service data of the uplink data with the NG Core through the second communication connection (for the uplink data dividing scheme not adopted).

Alternatively, this includes transmitting the uplink data of the NR uRLLC service with the NG Core through the first communication connection, and transmitting the uplink data of the NR uRLLC service with the NG Core through the second communication connection (for an uplink data dividing scheme).

In a specific implementation, the uplink data may be directly connected to the NG Core through the second communication for interaction, or may directly interact with the NG Core through the first communication connection according to actual conditions.

It can be seen that in this example, since the electronic device maintains a dual connection mode, the transmission mode of service data can be flexibly selected based on the channel quality, which improves the efficiency and stability of data transmission.

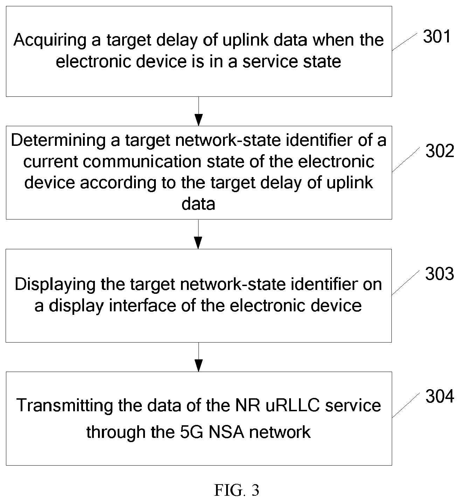

Consistent with the embodiment shown in FIG. 2A, please refer to FIG. 3. FIG. 3 is a schematic flowchart of a method for a network-state identifier display control provided by an embodiment of the present disclosure. The flowchart is applied to the electronic device in the communication system as shown in FIG. 1A, the electronic device supports a dual connection mode, and the dual connection mode means that the electronic device establishes a first communication connection with a first network device and establishes a second communication connection with a second network device, the first network device and the second network device are network devices in the first and fifth generation 5G NSA networks, and the first network device is an evolved 4G base station eNB, and the second network device is a 5G base station gNB, the core network of the 5G NSA network is NG Core, the first network device is in communication with the second network device, and the first network device is in communication with the NG Core. As shown in the figure, the method includes actions in the following.

301. acquiring a target delay of uplink data when the electronic device is in a service state.

302. determining the target network-state identifier of the current communication state of the electronic device according to the target delay of uplink data.

303. displaying the target network-state identifier on the display interface of the electronic device.

304. transmitting the data of the NR uRLLC service through the 5G NSA network.

It can be seen that, in the embodiment of the present disclosure, when the electronic device detects that the electronic device is in the service state, it obtains the target delay of uplink data, and determines the target network-state identifier of the current communication state of the electronic device according to the target delay of uplink data, the target network-state identifier is displayed on the display interface of the electronic device, and the data of the NR uRLLC service is transmitted through the 5G NSA network. It can be seen that in the service state of the electronic device, the corresponding network-state identifier can be selected according to the data delay parameter of the uplink data, such as displaying the 4G identifier or 5G identifier, etc., so that it can accurately, intuitively and comprehensively display the actual data state of the electronic device during the service state, improving the comprehensiveness and accuracy of information displayed by the electronic device.

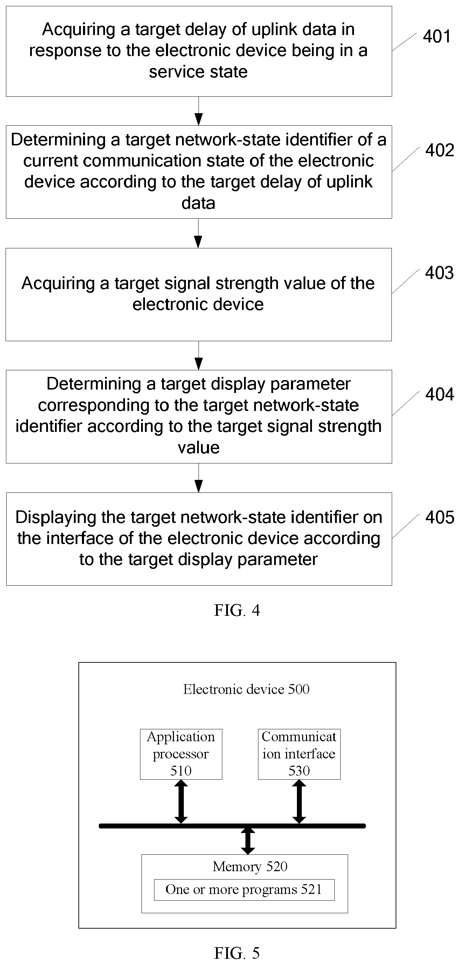

Consistent with the embodiment shown in FIG. 2A, please refer to FIG. 4. FIG. 4 is a schematic flowchart of a method for a network-state identifier display control provided by an embodiment of the present disclosure, which is applied to the electronic device in the communication system as shown in FIG. 1A, the electronic device supports a dual connection mode, and the dual connection mode means that the electronic device establishes a first communication connection with a first network device, and establishes a second communication connection with a second network device, the first network device and the second network device are network devices in the first and fifth generation 5G NSA networks, and the first network device is an evolved 4G base station eNB, and the second network device is a 5G base station gNB, the core network of the 5G NSA network is NG Core, the first network device is in communication with the second network device, and the first network device is in communication with the NG Core. As shown in the figure, the method includes actions at the following blocks.

At block 401, a target delay of uplink data when the electronic device is in a service state is acquired.

At block 402, the target network-state identifier of the current communication state of the electronic device according to the target delay of uplink data is determined.

At block 403, a target signal strength value of the electronic device is obtained.

At block 404, a target display parameter corresponding to the target network-state identifier according to the target signal strength value is determined.

At block 405, the target network-state identifier on the display interface of the electronic device according to the target display parameter is displayed.

It can be seen that, in this embodiment of the present disclosure, when the electronic device detects that the electronic device is in the service state, it obtains the target delay of uplink data, and determines the target network-state identifier of the current communication state of the electronic device according to the target delay of uplink data, the target network-state identifier on the display interface of the electronic device is displayed. It can be seen that in the service state of the electronic device, the corresponding network-state identifier can be selected according to the data delay parameter of the uplink data, such as displaying the 4G identifier or 5G identifier, etc., so that the actual data state of the electronic device during the service state can be accurately, intuitively and comprehensively displayed, improving the comprehensiveness and accuracy of information displayed by the electronic device.

In addition, since the electronic device maintains the dual connection mode, the transmission mode of the service data can be flexibly selected based on the channel quality, which improves the efficiency and stability of data transmission.

Consistent with the embodiments shown in FIGS. 2A, 3, and 4, please refer to FIG. 5. FIG. 5 is a schematic structural diagram of an electronic device 500 provided by an embodiment of the present disclosure. As shown in the figure, the electronic device 500 supports dual connection mode. The dual connection mode means that the electronic device establishes a first communication connection with a first network device and a second communication connection with a second network device. The second network device is a network device in a first and fifth generation 5G NSA network, and the first network device is an evolved 4G base station eNB, and the second network device is a 5G base station gNB , The core network of the 5G NSA network is a 5G core network device, the first network device is in communication connection with the second network device, and the first network device is in communication connection with the 5G core network device; The electronic device 500 includes an application processor 510, a memory 520, a communication interface 530, and one or more programs 521, where the one or more programs 521 are stored in the memory 520 and configured to be executed by the application processor 510, the one or more programs 521 include instructions for executing the following operations.

A target delay of uplink data when the electronic device is in a service state is acquired.

The target network-state identifier of the current communication state of the electronic device according to the target delay of uplink data is determined.

The target network-state identifier on the display interface of the electronic device is displayed.

It can be seen that, in this embodiment of the present disclosure, when the electronic device detects that the electronic device is in the service state, it obtains the target delay of uplink data, and determines the target network-state identifier of the current communication state of the electronic device according to the target delay of uplink data, the target network-state identifier on the display interface of the electronic device is displayed. It can be seen that in the service state of the electronic device, the corresponding network-state identifier can be selected according to the data delay parameter of the uplink data, such as displaying the 4G identifier or 5G identifier, etc., so that the actual data state of the electronic device during the service state can be accurately, intuitively and comprehensively displayed, improving the comprehensiveness and accuracy of information displayed by the electronic device.

In a possible example, in terms of determining the target network-state identifier of the current communication state of the electronic device according to the target delay of uplink data, the program includes instructions for performing the following operations.

A target delay-range corresponding to the target delay of uplink data is determined.

The target network-state identifier corresponding to the target delay-range according to the mapping relationship between the preset delay-range and the network-state identifier is determined.

In a possible example, in terms of determining the target network-state identifier corresponding to the target delay-range according to the mapping relationship between the preset delay-range and the network-state identifier, the program includes instructions for performing the following operations.

The target network-state identifier is determined as a NR uRLLC identifier when the target delay-range is a first preset range.

The target network-state identifier is determined as a 4G identifier, when the target delay-range is a second preset range, and the upper limit value of the first preset range is smaller than the lower limit value of the second preset range.

In a possible example, in terms of determining that the target network-state identifier is a NR uRLLC identifier, the program includes instructions for performing the following operations.

A query request for a network-state identifier of the NR uRLLC service to the first network device is sent.

Indication information of the network-state identifier from the first network device is received.

The network-state identifier of the NR uRLLC service according to the network-state identifier indication information is determined and stored.

In a possible example, the program further includes instructions for performing the following operations.

The data of the NR uRLLC service through the 5G NSA network is transmitted.

In a possible example, in terms of transmitting the data of the NR uRLLC service through the 5G NSA network, the program includes instructions for performing the following operations.

The data of the NR uRLLC service with the 5G core network device through the second communication connection and with the 5G core network device through the first communication connection is transmitted.

In a possible example, in terms of displaying the target network-state identifier on the display interface of the electronic device, the program includes instructions for performing the following operations.

The target signal strength value of the electronic device is acquired.

The target display parameter corresponding to the target network-state identifier according to the target signal strength value is determined.

The target network-state identifier on the display interface of the electronic device according to the target display is displayed.

The foregoing mainly introduces the scheme of the embodiment of the present disclosure from the perspective of the execution process on the method side. It can be understood that, in order to implement the above-mentioned functions, the electronic device includes hardware structures and/or software modules corresponding to execute each function. Those skilled in the art should easily realize that in combination with the units and algorithm steps of the examples described in the embodiments provided herein, the present disclosure can be implemented in the form of hardware or a combination of hardware and computer software. Whether a function is executed by hardware or computer software-driven hardware depends on the specific application and design constraints of the technical scheme. Professionals and technicians can use different methods for each specific application to implement the described functions, but such implementation should not be considered beyond the scope of this disclosure.

The embodiment of the present disclosure may divide the electronic device into functional units according to the foregoing method examples. For example, each functional unit may be divided corresponding to each function, or two or more functions may be integrated into one processing unit. The above-mentioned integrated unit can be realized in the form of hardware or software functional unit. It should be noted that the division of units in the embodiments of the present disclosure is illustrative, and is only a logical function division, and there may be other division methods in actual implementation.

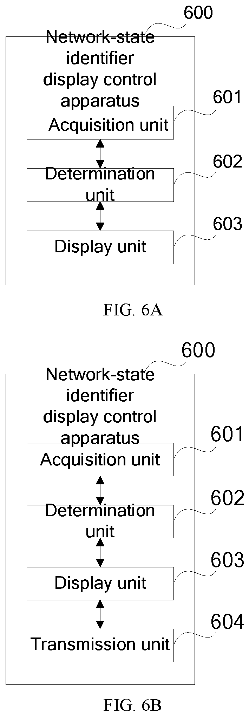

FIG. 6A is a block diagram of the functional unit composition of the network-state identifier display control apparatus 600 involved in an embodiment of the present disclosure. The network-state identifier display control apparatus 600 is applied to the electronic device. The electronic device supports a dual connection mode. The dual connection mode means that the electronic device establishes a first communication connection with a first network device, and a second communication connection is established with a second network device, the first network device and the second network device are network devices in the first and fifth generation 5G NSA network, and the first network is an evolved 4G base station eNB, the second network device is a 5G base station gNB, the core network of the 5G NSA network is a 5G core network device, and the first network equipment is connected to the second network. The device is in communication connection, and the first network device is in communication connection with the 5G core network device; the network-state identifier display control apparatus 600 includes an acquisition unit 601, a determination unit 602, and a display unit 603.

The acquisition unit 601 is configured to obtain a target delay of uplink data when the electronic device is in a service state.

The determination unit 602 is configured to determine the target network-state identifier of the current communication state of the electronic device according to the target delay of uplink data.

The display unit 603 is configured to display the target network-state identifier on the display interface of the electronic device.

It can be seen that the network-state identifier display control apparatus in the embodiment of the present disclosure is applied to the electronic device. When the electronic device detects that the electronic device is in a service state, the electronic device obtains the target delay of uplink data, the target network-state identifier of the current communication state of the electronic device is determined based on the target delay of uplink data, and the target network-state identifier is displayed on the display interface of the electronic device. It can be seen that in the service state of the electronic device, the corresponding network-state identifier can be selected according to the data delay parameter of the uplink data, such as displaying the 4G identifier or 5G identifier, etc., so that the actual data state of the electronic device during the service state can be accurately, intuitively and comprehensively displayed, improving the comprehensiveness and accuracy of information displayed by the electronic device.

In a possible example, in terms of determining the target network-state identifier of the current communication state of the electronic device according to the target delay of uplink data, the determination unit 602 is specifically configured to: determine a target delay-range corresponding to the target delay of uplink data; determine the target network-state identifier corresponding to the target delay-range according to the mapping relationship between preset delay-ranges and network-state identifiers.

In a possible example, in terms of determining the target network-state identifier corresponding to the target delay-range according to the mapping relationship between the preset delay-range and the network-state identifier, the determination unit 602 is specifically configured to: determine the target network-state identifier as a NR uRLLC identifier when the target delay-range is a first preset range; determine the target network-state identifier as a 4G identifier when the target delay-range is a second preset range, and the upper limit value of the first preset range is less than the lower limit value of the second preset range.

In a possible example, in terms of determining that the target network-state identifier is NR uRLLC, the determination unit 602 is specifically configured to: send a query request for a network-state identifier of the NR uRLLC service to the first network device; receive indication information the network-state identifier from the first network device; determine and store the network-state identifier of the NR uRLLC service according to the indication information of the network-state identifier.

In a possible example, as shown in FIG. 6B, FIG. 6B is another modified structure of the network-state identifier display control apparatus described in FIG. 6A. Compared with FIG. 6A, it may further include a transmission unit 604, specifically as follows:
the transmission unit 604 is configured to transmit the data of the NR uRLLC service through the 5G NSA network.

In a possible example, in terms of transmitting the data of the NR uRLLC service through the 5G NSA network, the transmission unit 604 is specifically configured to:
transmit the data of the NR uRLLC service with the 5G core network device through the second communication connection and with the 5G core network device through the first communication connection.

In a possible example, in terms of displaying the target network-state identifier on the display interface of the electronic device, the display unit 603 is specifically configured to: acquire the target signal strength value of the electronic device; determine the target display parameter corresponding to the target network-state identifier according to the target signal strength value; and display the target network-state identifier on the display interface of the electronic device according to the target display parameter.

It should be noted that the electronic devices described in the embodiments of the present disclosure are presented in the form of functional units. The term "unit" used here should be understood as the broadest possible meaning. The obj ect used to implement the functions described by each "unit" may be, for example, an integrated circuit ASIC, a single circuit, a processor (shared, dedicated or chipset) and memory used to execute one or more software or firmware, combinational logic circuit, and/or other suitable components for realizing the above functions.

The acquisition unit 601, the determination unit 602, the display unit 603, and the transmission unit 604 may be a control circuit or a processor.

An embodiment of the present disclosure also provides a computer storage medium, wherein the computer storage medium stores a computer program for electronic data exchange, and the computer program enables a computer to execute part or all of the steps of any method as recorded in the above method embodiment, the aforementioned computer includes electronic devices.

The embodiments of the present disclosure also provide a computer program product. The above-mentioned computer program product includes a non-transitory computer-readable storage medium storing the computer program.

The above-mentioned computer program can be operated to enable a computer to execute part or all of the steps of any methods described in the above-mentioned method embodiments. The computer program product may be a software installation package, and the above-mentioned computer includes electronic devices.

It should be noted that for the foregoing method embodiments, for the sake of simple description, they are all expressed as a series of action combinations, but those skilled in the art should know that this application is not limited by the described sequence of actions. Because according to this application, some steps can be performed in other order or simultaneously. In addition, those skilled in the art should also know that the embodiments described in the specification are all preferred embodiments, and the involved actions and modules are not necessarily required by this disclosure.

In the above embodiments, the description of each embodiment has its own emphasis. Parts that are not described in detail in one embodiment may refer to related descriptions in other embodiments.

In the embodiments provided in the present disclosure, it should be understood that the disclosed apparatus may be implemented by other means. For example, the apparatus embodiments described above are merely illustrative. For example, the above-mentioned division of the units is only a type of logical function division, and there may be other types of division in actual implementation, for example, multiple units or components may be combined or integrated into another system, or some features may be omitted or not implemented. Further, the described or discussed mutual coupling or direct coupling or communicative connection may be achieved through some interfaces, indirect coupling or communicative connection. The connection and coupling of devices or units may be in electrical or other forms.

The units described above as separate components may or may not be physically separated, and the components displayed as units may or may not be physical units. That is, they may be located in one place, or they may be distributed on multiple network units. Some or all of the units may be selected according to actual needs to achieve the objectives of the solutions of the embodiments.

In addition, various functional units in the various embodiments of the present disclosure may be integrated into one processing unit. Alternatively, each unit may exist alone physically. Alternatively, two or more units may be integrated into one unit. The above-mentioned integrated unit may be achieved in the form of hardware or software functional unit.

When the above integrated unit is implemented in the form of a software functional unit and sold or used as an independent product, the unit may be stored in a non-transitory computer readable memory. In this way, the essence of the technical solution of the present disclosure, or the part of the technical solution of the present disclosure that contributes to the art or all or a part of the technical solution of the present disclosure may be achieved in the form of a software product. The computer software product may be stored in a non-transitory memory and include a number of instructions to enable a computer device (which may be a personal computer, a server, or a network device, etc.) to perform all or a part of the operations of the above-mentioned methods of the various embodiments of the present disclosure. The above-mentioned non-transitory memory may include: a universal serial bus disk, a read-only memory (ROM), a random access memory (RAM), a mobile hard drive, a magnetic disk, or an optical disk and other media that can store program codes.

Those ordinary skilled in the art should understand that all or a part of the operations in the various methods of the embodiments may be completed by a program instructing relevant hardware. The program may be stored in the computer-readable non-transitory memory, and the non-transitory memory may include: a flash disk, the Read-only memory (ROM), the random access memory (RAM), the magnetic disk or the optical disk, etc.

The embodiments of the present disclosure are described in detail, and specific examples are used in the specification to illustrate principles and implementation of the present disclosure. The descriptions of the above embodiments are used to facilitate the understanding of the methods and essential concept of the present disclosure. Based on the concept of the present disclosure, any ordinary skilled in the art may perform modification in the specific implementation.

## Claims

1. A control method for displaying a network-state identifier, said method being performed by an electronic device (101, 120), the electronic device (101, 120) supporting a dual connection mode in which the electronic device (101, 120) is capable of establishing a first communication connection with a first network device (102, 110) and is capable of establishing a second communication connection with a second network device (103, 110), wherein each of the first network device (102, 110) and the second network device (103, 110) is a network device in a fifth-generation, 5G, non-standalone, NSA, network; the first network device (102, 110) is an evolved fourth-generation, 4G, base station; the second network device (103, 110) is a 5G base station, a core network of the 5G NSA network is a next-generation core network, NGC (104), the first network device (102, 110) is in a communication connection with the second network device (103, 110), and the first network device (102, 110) is in a communication connection with the NGC (104), the method being **characterized in that** it comprises:
acquiring (201, 301, 401) a target delay of uplink data in response to the electronic device (101, 120) being in a service state, wherein the service state is an eMBB service state or a NR uRLLC service state, and the target delay of uplink data is a delay time between the electronic device and any of the first network device (102, 110) and second network device (103, 110);
determining (202, 302, 402) a target network-state identifier of a current communication state of the electronic device (101, 120) according to the target delay of uplink data, wherein the target network-state identifier comprises at least one of a NR uRLLC identifier, a 4G identifier, and a 5G identifier; and
displaying (203, 303) the target network-state identifier on a display interface of the electronic device (101, 120).

2. The method according to claim 1, wherein the determining (202, 302) the target network-state identifier of the current communication state of the electronic device (101, 120) according to the target delay of uplink data comprises:
determining a target delay-range corresponding to the target delay of uplink data; and
determining the target network-state identifier corresponding to the target delay-range according to a preset mapping relationship between delay-ranges and network-state identifiers.

3. The method according to claim 2, wherein the determining the target network-state identifier corresponding to the target delay-range according to the preset mapping relationship between the delay-ranges and the network-state identifier comprises:
determining the target network-state identifier as the NR uRLLC identifier in response to the target delay-range being a first preset range; and
determining the target network-state identifier as the 4G identifier in response to the target delay-range being a second preset range, wherein an upper limit of the first preset range is less than a lower limit of the second preset range.

4. The method according to claim 3, further comprising:
sending a query request for a network-state identifier of the NR uRLLC service to the first network device (102, 110);
receiving indication information of the network-state identifier from the first network device (102, 110); and
determining and storing the network-state identifier of the NR uRLLC service according to the indication information.

5. The method according to claim 4, further comprising:
transmitting (304) data of the NR uRLLC service through the 5GNSA network.

6. The method according to claim 5, wherein the transmitting (304) the data of the NR uRLLC service through the 5G NSA network comprises:
transmitting the data of the NR uRLLC service with the next-generation core network, NGC, (104) through the second communication connection and with the NGC (104) through the first communication connection.

7. The method according to claim 1, wherein the displaying the target network-state identifier on a display interface of the electronic device comprises:
acquiring a target signal strength value of the electronic device (101, 120);
determining a target display parameter corresponding to the target network-state identifier according to the target signal strength value; and
displaying the target network-state identifier on the display interface of the electronic device (101, 120) according to the target display parameter.

8. An electronic device (101, 120, 500), supporting a dual connection mode in which the electronic device (101, 120) is capable of establishing a first communication connection with a first network device (102, 110) and is capable of establishing a second communication connection with a second network device (103, 110), and comprising a processor (510), a memory (520), a communication interface (530), and one or more programs (521), wherein each of the first network device (102, 110) and the second network device (103, 110) is a network device in a fifth-generation, 5G, non-standalone, NSA, network; the first network device (102, 110) is an evolved fourth-generation, 4G, base station; the second network device (103, 110) is a 5G base station, a core network of the 5G NSA network is a next-generation core network, NGC (104), the first network device (102, 110) is in a communication connection with the second network device (103, 110), and the first network device (102, 110) is in a communication connection with the NGC (104), the one or more programs (521) are stored in the memory (520) and are configured to be executed by the processor (510), and the programs (521) comprise instructions for performing the operations of the method according to any one of claims 1 to 7.

9. A computer-readable storage medium, configured to store a computer program for exchanging electronic data, **characterized in that** the computer program comprises instructions which, when executed by an electronic device, causes the electronic device to perform the method according to any one of claims 1 to 7.

## Patentansprüche

1. Verfahren zur Steuerung der Anzeige eines Netzwerkstatusidentifikators, wobei das Verfahren durch eine elektronische Einrichtung (101, 120) durchgeführt wird, wobei die elektronische Einrichtung (101, 120) einen dualen Verbindungsmodus unterstützt, bei dem die elektronische Einrichtung (101, 120) fähig ist, eine erste Kommunikationsverbindung mit einer ersten Netzwerkeinrichtung (102, 110) aufzubauen, und fähig ist, eine zweite Kommunikationsverbindung mit einer zweiten Netzwerkeinrichtung (103, 110) aufzubauen, wobei sowohl die erste Netzwerkeinrichtung (102, 110) als auch die zweite Netzwerkeinrichtung (103, 110) eine Netzwerkeinrichtung in einem nicht eigenständigen ("Non-Standalone", NSA) Netzwerk der fünften Generation, 5G, ist, die erste Netzwerkeinrichtung (102, 110) eine Basisstation der entwickelten vierten Generation, 4G, ist, die zweite Netzwerkeinrichtung (103, 110) eine 5G-Basisstation ist, ein Kernnetz des 5G-NSA-Netzwerks ein Kernnetz der nächsten Generation, NGC, (104) ist, die erste Netzwerkeinrichtung (102, 110) in einer Kommunikationsverbindung mit der zweiten Netzwerkeinrichtung (103, 110) steht und die erste Netzwerkeinrichtung (102, 110) in einer Kommunikationsverbindung mit dem NGC (104) steht, wobei das Verfahren **dadurch gekennzeichnet ist, dass** es umfasst:
Erfassen (201, 301, 401) einer Zielverzögerung von Uplink-Daten in Reaktion darauf, dass die elektronische Einrichtung (101, 120) in einem Dienstzustand ist, wobei der Dienstzustand ein eMBB-Dienstzustand oder ein NR-uRLLC-Dienstzustand ist und die Zielverzögerung von Uplink-Daten eine Verzögerungszeit zwischen der elektronischen Einrichtung und der ersten Netzwerkeinrichtung (102, 110) oder der zweiten Netzwerkeinrichtung (103, 110) ist;
Bestimmen (202, 302, 402) eines Ziel-Netzwerkstatusidentifikators eines aktuellen Kommunikationszustands der elektronischen Einrichtung (101, 120) entsprechend der Zielverzögerung von Uplink-Daten, wobei der Ziel-Netzwerkstatusidentifikator mindestens einen von einem NR-uRLLC-Identifikator, einem 4G-Identifikator und einem 5G-Identifikator umfasst; und
Anzeigen (203, 303) des Ziel-Netzwerkstatusidentifikators auf einer Anzeigeoberfläche der elektronischen Einrichtung (101, 120).

2. Verfahren nach Anspruch 1, wobei das Bestimmen (202, 302) des Ziel-Netzwerkstatusidentifikators des aktuellen Kommunikationszustands der elektronischen Einrichtung (101, 120) entsprechend der Zielverzögerung von Uplink-Daten umfasst:
Bestimmen eines Ziel-Verzögerungsbereichs entsprechend der Zielverzögerung von Uplink-Daten; und
Bestimmen des Ziel-Netzwerkstatusidentifikators entsprechend dem Ziel-Verzögerungsbereich gemäß einer vorgegebenen Abbildungsbeziehung zwischen Verzögerungsbereichen und Netzwerkstatusidentifikatoren.

3. Verfahren nach Anspruch 2, wobei das Bestimmen des Ziel-Netzwerkstatusidentifikators entsprechend dem Ziel-Verzögerungsbereich gemäß der vorgegebenen Abbildungsbeziehung zwischen den Verzögerungsbereichen und dem Netzwerkstatusidentifikator umfasst:
Festlegen des Ziel-Netzwerkstatusidentifikators als den NR-uRLLC-Identifikator in Reaktion darauf, dass der Ziel-Verzögerungsbereich ein erster vorgegebener Bereich ist; und
Festlegen des Ziel-Netzwerkstatusidentifikators als den 4G-Identifikator in Reaktion darauf, dass der Ziel-Verzögerungsbereich ein zweiter vorgegebener Bereich ist, wobei ein oberer Grenzwert des ersten vorgegebenen Bereichs kleiner ist als ein unterer Grenzwert des zweiten vorgegebenen Bereichs.

4. Verfahren nach Anspruch 3, ferner umfassend:
Senden eines Anfrageabrufs eines Netzwerkstatusidentifikators des NR-uRLLC-Dienstes zu der ersten Netzwerkeinrichtung (102, 110);
Empfangen von Angabeinformationen des Netzwerkstatusidentifikators von der ersten Netzwerkeinrichtung (102, 110); und
Bestimmen und Speichern des Netzwerkstatusidentifikators des NR-uRLLC-Dienstes gemäß den Angabeinformationen.

5. Verfahren nach Anspruch 4, ferner umfassend:
Senden (304) von Daten des NR-uRLLC-Dienstes durch das 5G-NSA-Netzwerk.

6. Verfahren nach Anspruch 5, wobei das Senden (304) der Daten des NR-uRLLC-Dienstes durch das 5G-NSA-Netzwerk umfasst:
Senden der Daten des NR-uRLLC-Dienstes mit dem Kernnetz der nächsten Generation, NGC, (104) über die zweite Kommunikationsverbindung und mit dem NGC (104) über die erste Kommunikationsverbindung.

7. Verfahren nach Anspruch 1, wobei das Anzeigen des Ziel-Netzwerkstatusidentifikators auf einer Anzeigeoberfläche der elektronischen Einrichtung umfasst:
Erfassen eines Ziel-Signalstärkewerts der elektronischen Einrichtung (101, 120);
Bestimmen eines Ziel-Anzeigeparameters entsprechend dem Ziel-Netzwerkstatusidentifikator gemäß dem Ziel-Signalstärkewert; und
Anzeigen des Ziel-Netzwerkstatusidentifikators auf der Anzeigeoberfläche der elektronischen Einrichtung (101, 120) entsprechend dem Ziel-Anzeigeparameter.

8. Elektronische Einrichtung (101, 120, 500), die einen dualen Verbindungsmodus unterstützt, bei dem die elektronische Einrichtung (101, 120) fähig ist, eine erste Kommunikationsverbindung mit einer ersten Netzwerkeinrichtung (102, 110) aufzubauen, und fähig ist, eine zweite Kommunikationsverbindung mit einer zweiten Netzwerkeinrichtung (103, 110) aufzubauen, und die einen Prozessor (510), einen Speicher (520), eine Kommunikationsschnittstelle (530) und ein oder mehrere Programme (521) umfasst, wobei sowohl die erste Netzwerkeinrichtung (102, 110) als auch die zweite Netzwerkeinrichtung (103, 110) eine Netzwerkeinrichtung in einem nicht eigenständigen ("Non-Standalone", NSA) Netzwerk der fünften Generation, 5G, ist, die erste Netzwerkeinrichtung (102, 110) eine Basisstation der entwickelten vierten Generation, 4G, ist, die zweite Netzwerkeinrichtung (103, 110) eine 5G-Basisstation ist, ein Kernnetz des 5G-NSA-Netzwerks ein Kernnetz der nächsten Generation, NGC, (104) ist, die erste Netzwerkeinrichtung (102, 110) in einer Kommunikationsverbindung mit der zweiten Netzwerkeinrichtung (103, 110) steht und die erste Netzwerkeinrichtung (102, 110) in einer Kommunikationsverbindung mit dem NGC (104) steht, das eine oder die mehreren Programme (521) in dem Speicher (520) gespeichert und dafür ausgelegt sind, von dem Prozessor (510) ausgeführt zu werden, und die Programme (521) Anweisungen zum Durchführen der Operationen des Verfahrens nach einem der Ansprüche 1 bis 7 umfassen.

9. Computerlesbares Speichermedium, ausgelegt zum Speichern eines Computerprogramms zum Austausch elektronischer Daten, **dadurch gekennzeichnet, dass** das Computerprogramm Anweisungen umfasst, die bei Ausführung durch eine elektronische Einrichtung die elektronische Einrichtung zum Durchführen des Verfahrens nach einem der Ansprüche 1 bis 7 veranlassen.

## Revendications

1. Procédé de commande pour afficher un identifiant d'état de réseau, ledit procédé étant exécuté par un dispositif électronique (101, 120), le dispositif électronique (101, 120) supportant un mode de connexion double dans lequel le dispositif électronique (101, 120) est apte à établir une première connexion de communication avec un premier dispositif réseau (102, 110) et est apte à établir une deuxième connexion de communication avec un deuxième dispositif réseau (103, 110), chacun parmi le premier dispositif réseau (102, 110) et le deuxième dispositif réseau (103, 110) étant un dispositif réseau dans un réseau non autonome, NSA, de cinquième génération, 5G ; le premier dispositif réseau (102, 110) est une station de base évoluée de quatrième génération, 4G ; le deuxième dispositif réseau (103, 110) est une station de base 5G, un réseau central du réseau NSA 5G est un réseau central de nouvelle génération, NGC (104), le premier dispositif réseau (102, 110) est dans une connexion de communication avec le deuxième dispositif réseau (103, 110), et le premier dispositif réseau (102, 110) est dans une connexion de communication avec le NGC (104), le procédé étant **caractérisé en ce qu'**il comprend :
l'acquisition (201, 301, 401) d'un retard cible de données de liaison montante en réponse au fait que le dispositif électronique (101, 120) est dans un état de service, l'état de service étant un état de service eMBB ou un état de service NR uRLLC, et le retard cible des données de liaison montante étant un temps de retard entre le dispositif électronique et l'un quelconque du premier dispositif réseau (102, 110) et du deuxième dispositif réseau (103, 110) ;
la détermination (202, 302, 402) d'un identifiant d'état de réseau cible d'un état de communication actuel du dispositif électronique (101, 120) selon le retard cible des données de liaison montante, l'identifiant d'état de réseau cible comprenant au moins l'un parmi un identifiant NR uRLLC, un identifiant 4G et un identifiant 5G ; et
l'affichage (203, 303) de l'identifiant d'état de réseau cible sur une interface d'affichage du dispositif électronique (101, 120).

2. Procédé selon la revendication 1, dans lequel la détermination (202, 302) de l'identifiant d'état de réseau cible de l'état de communication actuel du dispositif électronique (101, 120) selon le retard cible des données de liaison montante comprend :
la détermination d'une plage de retard cible correspondant au retard cible des données de liaison montante ; et
la détermination de l'identificateur d'état de réseau cible correspondant à la plage de retard cible selon une relation de mappage prédéfinie entre les plages de retard et les identificateurs d'état du réseau.

3. Procédé selon la revendication 2, dans lequel la détermination de l'identifiant d'état de réseau cible correspondant à la plage de retard cible selon la relation de mappage prédéfinie entre les plages de retard et l'identifiant d'état de réseau comprend :
la détermination de l'identifiant d'état de réseau cible en tant que l'identifiant NR uRLLC en réponse au fait que la plage de retard cible est une première plage prédéfinie ; et
la détermination de l'identifiant d'état de réseau cible en tant qu'identifiant 4G en réponse au fait que la plage de retard cible est une deuxième plage prédéfinie, une limite supérieure de la première plage prédéfinie étant inférieure à une limite inférieure de la deuxième plage prédéfinie.

4. Procédé selon la revendication 3, comprenant en outre :
l'envoi d'une demande d'interrogation pour un identifiant d'état de réseau du service NR uRLLC au premier dispositif réseau (102, 110) ;
la réception d'informations d'indication de l'identifiant d'état de réseau depuis le premier dispositif réseau (102, 110) ; et
la détermination et le stockage de l'identifiant d'état de réseau du service NR uRLLC selon les informations d'indication.

5. Procédé selon la revendication 4, comprenant en outre :
la transmission (304) de données du service NR uRLLC via le réseau NSA 5G.

6. Procédé selon la revendication 5, dans lequel la transmission (304) des données du service NR uRLLC via le réseau NSA 5G comprend :
la transmission des données du service NR uRLLC avec le réseau central de nouvelle génération, NGC, (104) via la deuxième connexion de communication et avec le NGC (104) via la première connexion de communication.

7. Procédé selon la revendication 1, dans lequel l'affichage de l'identifiant d'état de réseau cible sur une interface d'affichage du dispositif électronique comprend :
l'acquisition d'une valeur d'intensité de signal cible du dispositif électronique (101, 120) ;
la détermination d'un paramètre d'affichage cible correspondant à l'identifiant d'état de réseau cible selon la valeur d'intensité de signal cible ; et
l'affichage de l'identifiant d'état de réseau cible sur l'interface d'affichage du dispositif électronique (101, 120) selon le paramètre d'affichage cible.

8. Dispositif électronique (101, 120, 500), supportant un mode de connexion double dans lequel le dispositif électronique (101, 120) est apte à établir une première connexion de communication avec un premier dispositif réseau (102, 110) et est apte à établir une deuxième connexion de communication avec un deuxième dispositif réseau (103, 110), et comprenant un processeur (510), une mémoire (520), une interface de communication (530) et un ou plusieurs programmes (521), chacun parmi le premier dispositif réseau (102, 110) et le deuxième dispositif réseau (103, 110) étant un dispositif réseau dans un réseau non autonome, NSA, de cinquième génération, 5G ; le premier dispositif réseau (102, 110) est une station de base évoluée de quatrième génération, 4G ; le deuxième dispositif réseau (103, 110) est une station de base 5G, un réseau central du réseau NSA 5G est un réseau central de nouvelle génération, NGC (104), le premier dispositif réseau (102, 110) est dans une connexion de communication avec le deuxième dispositif réseau (103, 110), et le premier dispositif réseau (102, 110) est en communication avec le NGC (104), le ou les programmes (521) sont stockés dans la mémoire (520) et sont configurés pour être exécutés par le processeur (510), et les programmes (521) comprennent des instructions pour effectuer les opérations du procédé selon l'une quelconque des revendications 1 à 7.

9. Support de stockage lisible par ordinateur, configuré pour stocker un programme informatique d'échange de données électroniques, **caractérisé en ce que** le programme informatique comprend des instructions qui, lorsqu'elles sont exécutées par un dispositif électronique, amènent le dispositif électronique à mettre en œuvre le procédé selon l'une quelconque des revendications 1 à 7.
